# EUROPEAN PATENT APPLICATION

(11) **EP 4 331 706 A1**
(43) Date of publication of application: **06.03.2024**
(21) Application number: 22192688.4
(22) Date of filing: 29.08.2022
(51) Int. Cl.: B01D 53/02, B01D 53/08, B01D 53/04

(54) **A CO2 CAPTURE DEVICE**

(71) Applicant: Welltec Manufacturing Center Completions ApS, 6715 Esbjerg N (DK)
(72) Inventor: KUMAR, Satish, 6300 Zug (CH)
(74) Representative: Dragsted Partners A/S

(57) **Abstract**

A carbon capture device comprising a flue gas input, a flue gas output, a carbon adsorption zone that is in fluid communication with the flue gas input and in fluid communication with the flue gas output, where a first flue gas communication channel comprises the carbon adsorption zone, where the first flue gas communication channel comprises a first fluid input and a first fluid output, and the carbon adsorption zone comprises a first CO2 sorbent material positioned downstream from the first fluid input and upstream to the first fluid output, where the first fluid input is in fluid communication with the flue gas input, and where the flue gas is directed past the CO2 sorbent material and towards the first fluid output, where the first fluid output is in fluid communication with the flue gas output, a carbon desorption zone, where the carbon desorption zone comprises a second CO2 sorbent material, and an actuation device where the actuation device is configured to transport carbon- rich first C02 sorbent material from the carbon adsorption zone to the carbon desorption zone and to transport carbon-lean second CO2 sorbent material from the carbon desorption zone to the carbon adsorption zone.

## Description

### Technical Field

A carbon capture device comprising a flue gas input, a flue gas output, a carbon adsorption zone that is in fluid communication with the flue gas input and in fluid communication with the flue gas output, where a first flue gas communication channel comprises the carbon adsorption zone, where the first flue gas communication channel comprises a first fluid input and a first fluid output, and the carbon adsorption zone comprises a first CO2 sorbent material positioned downstream from the first fluid input and upstream to the first fluid output

### Description

The issue of climate change has become a topic driving the directions of almost every business operation. Various climate change mitigation solutions have been proposed for various sectors and are at various stages of maturity. The road transport sector is said to account for around 11.9% of global GHGs (Climate Watch, World Resources Institute 2020). Lithium batteries, Hydrogen, Ammonia, and Methanol have been the mitigation pathways in this sector, with lithium batteries by far leading the competition. While the use of lithium batteries has picked up in terms of acceptance level for light motor vehicles, heavy-duty transport has still been largely unaffected, as the weight of the batteries is significant, and the amount/magnitude of lithium needed to equip the heavy vehicle transport sector is massive. One mitigation solution for heavy transport involves addressing the issue directly by capturing the CO2 directly from the air (DAC) or from various industrial sources to recycle it to form synthetic fuels. This method is largely called CCU, or Carbon Capture and Utilization. While these methods have been proposed mostly for industrial emissions, the intention of this project is to develop a commercial retrofittable in-situ carbon capture, transport and re-use (ICCTR) system for the heavy-duty road transport sector that could also be used for light weight motor vehicles. This solution could minimize the need to develop new distribution infrastructure while transitioning the road transport sector to become carbon neutral without the need for major modifications to their engines. This method would also reduce the dependency of the synthetic fuel cycle on direct air capture methods, assuring a reliable feedstock of CO2 and thus enabling a carbon neutral and sustainable energy system. The elimination of batteries in heavy transport could also help the heavy transport sector remain independent of the underlying geopolitics associated with batteries.

Thus, there is a need to attempt to reduce the CO2 emissions from the heavy-duty transport sector, and especially in the area of heavy-duty transport vehicles, such as long haul trucks having internal combustion engines.

In accordance with the invention, there is provided a carbon capture device comprising a flue gas input, a flue gas output, a carbon adsorption zone that is in fluid communication with the flue gas input and in fluid communication with the flue gas output, where a first flue gas communication channel comprises the carbon adsorption zone , where the first flue gas communication channel comprises a first fluid input and a first fluid output, and the carbon adsorption zone comprises a first CO2 sorbent material positioned downstream from the first fluid input and upstream to the first fluid output, where the first fluid input is in fluid communication with the flue gas input, and where the flue gas is directed past the CO2 sorbent material and towards the first fluid output, where the first fluid output is in fluid communication with the flue gas output, a carbon desorption zone, where the carbon desorption zone comprises a second CO2 sorbent material, and an actuation device where the actuation device is configured to transport carbon- rich first C02 sorbent material from the carbon adsorption zone to the carbon desorption zone and to transport carbon-lean second CO2 sorbent material from the carbon desorption zone to the carbon adsorption zone.

This means that a carbon capture device may be provided where the CO2 sorbent material may be transported from the carbon adsorption zone and the carbon desorption zone continuously using an actuator, where carbon-rich CO2 sorbent material, which has been saturated with the carbon of the flue gas in the carbon adsorption zone, may be transported away from the adsorption zone and towards the carbon desorption zone. Thus, by moving the carbon-rich CO2 sorbent material to the desorption zone, the CO2 may be desorbed from the CO2 sorbent material and may be collected or trapped when the CO2 is released from the CO2 sorbent material, thereby preventing a large part of the CO2 from entering the atmosphere. While this is happening, a second CO2 sorbent material may be moved from the carbon desorption zone, where the second CO2 sorbent material is carbon-lean, i.e. where the CO2 that can be adsorbed by the material has been released, and the carbon-lean CO2 sorbent material may be transported back to the carbon adsorption zone, where the carbon-lean CO2 sorbent material is in a state where the material can adsorb CO2 gasses from the flue gas. The sorbent material may be of any solid form, such as powder, granules, pellets, extruded forms, fibers, etc.

This operation is different from what is known in the art in that the art discloses the use of reactor units that are interconnected via flow circuits and valves and may be operated to successively cycle the reactor units through different states from adsorption, preheating, desorption and precooling. Thus, the reactors are provided with CO2 sorbent material, where the operation of each reactor may be changed from one state to another state. Thus, the CO2 sorbent material that is introduced into one reactor is maintained inside the reactor, where the state of the adsorbent material determines what state the reactor is put into. Thus, when a CO2 sorbent material in a first reactor has adsorbed a predefined amount of CO2, the state of the reactor is changed to a preheating state where the CO2 sorbent material is prepared for desorption, and when the CO2 sorbent material has been heated, the state of the reactor is changed to a desorption state. Thus, the CO2 sorbent material is kept inside one reactor and is never transported from one reactor to another reactor or from one zone of the reactor to another zone.

However, the carbon capture device of the present invention has predefined areas having predefined purposes or states, where it is the CO2 sorbent material that is transported between zones of the carbon capture device. Doing so makes the adsorption system less bulky, and may use a reduced amount of adsorption material and may be more inexpensive to construct.

The flue gas input may be in fluid communication with a first fluid input, where the first fluid input may be in fluid communication with the carbon adsorption zone via the first flue gas communication channel. When the flue gas has passed through the carbon adsorption zone, the flue gas, which may be have a reduced CO2 content, will exit the carbon adsorption zone via the first fluid output, which is in fluid communication with the flue gas output. The CO2 sorbent material may be positioned inside the carbon adsorption zone, where the CO2 sorbent material enters the carbon adsorption zone in a carbon-lean state, and where the CO2 sorbent material is in a state where the CO2 sorbent material is capable of adsorbing the CO2 from the flue gas when the flue gas enters the carbon adsorption zone. The flow rate of the adsorbent in the actuation system may be determined such that when the CO2 sorbent material has adsorbed sufficient (a predetermined amount) of CO2, the material may be transported via an actuator towards the carbon desorption zone of the device. The flow rate may be varied electronically by means of a closed loop feedback system where several parameters of the engine and the adsorption system are measured, ensuring optimal functioning of the entire system. Thus, the transport of the carbon-rich CO2 sorbent material is initiated when sufficient CO2 has been adsorbed by the material, and the material is transported to the carbon desorption zone, where the CO2 is desorbed (released from the CO2 sorbent material) and can be collected from the carbon desorption zone. When sufficient carbon has been released from the CO2 sorbent material in the carbon desorption zone, the carbon-lean CO2 sorbent material may be transported back to the carbon adsorption zone of the device via an actuator. This initiation may be done by using sensors, or may be determined using test methods, where the CO2 gasses in the flue gas output may be monitored, and the transport rate of the sorbent material in the system may be determined.

Thus, the present device provides a cycle of CO2 sorbent material where the positioning of the CO2 sorbent material in predetermined parts of the device determines the state and/or operation of the CO2 sorbent material in order to provide carbon capture from a flue gas. The CO2 sorbent material may be cycled from one position to a second position in the device, and from a second position to a third position in the device, where the CO2 sorbent material is eventually cycled back to its first position. The cycle may be repeated continuously to move the CO2 sorbent material throughout different positions in the device, where each position may have a different purpose, such as adsorption, desorption, heating and/or cooling.

Within the understanding of the present invention, the first CO2 sorbent material and the second CO2 sorbent material may be the same or similar material, and the first CO2 sorbent material and the second CO2 sorbent material may be part of a total amount of CO2 sorbent material present in the carbon capture device.

The use of the terminology "first" and "second" should be considered as an identifier for the CO2 sorbent material in different positions inside the carbon capture device.

In one exemplary embodiment of the present disclosure, the device may comprise a thermal management system that maintains the desorption zone at a desorption temperature Td and the adsorption zone at a temperature Ta. The desorption temperature may be the second temperature and the first temperature may be the first temperature.

In one exemplary embodiment of the present invention, the carbon-lean material may be stacked on top of the carbon-richer material in the carbon adsorption zone, and the carbon-rich material may be positioned at the bottom of the carbon adsorption zone. Thus, when the carbon-lean material is introduced into the carbon adsorption zone of the device, the carbon-lean material may be arranged on top of the CO2 sorbent material that is already positioned inside the carbon adsorption zone. Thus, the carbon-lean material (second CO2 sorbent material) may be introduced into the carbon adsorption zone via gravity.

In accordance with one or more exemplary embodiments, CO2 sorbent materials (adsorbent materials) may include metal organic frameworks (Mg, Zn, Al or Fe MOF), zeolitic imidazolate frameworks (ZIF-8, ZIF-69), amine functionalized porous polymer networks (PPN-6-CH2-DETA, PPN-6-CH2-TETA), amine infused silica (PEI-silica), amine loaded MCM-41 (PEI-MCM-41), mmen-M2(dobpdc) frameworks?, zeolites (Zeolite-5 A), or any MOFs and zeolite that is capable of adsorbing CO2 as disclosed in the present disclosure. In an embodiment, amine-doped metal-organic framework (MOF) adsorbents are selected for CO2 capture, as they show good performance in the presence of water.

In one exemplary embodiment, the device may comprise a heat exchanger that may be configured to extract heat energy from the flue gas upstream from the flue gas input, and optionally provide thermal energy to the CO2 sorbent material to increase or decrease the temperature of the CO2 sorbent material inside the system. The CO2 sorbent material may be a material that is capable of performing different tasks at different temperatures, where the CO2 sorbent material may be configured to adsorb CO2 at a first temperature and may be configured to desorb CO2 at a second temperature. The sorbent material and the method to use it may be Thermal Swing Adsorption (TSA)The heat exchanger may be utilized to harvest heat energy from the flue gas, where the heat exchanger may e.g. reduce the heat of the flue gas before it enters the first fluid input, and where the absorbed heat from the flue gas may be utilized to increase the temperature of the CO2 sorbent material after the material has been transported from the carbon adsorption zone towards the desorption zone. The thermal energy absorbed from the flue gas can also be utilized for different purposes, such as heating up different zones of the carbon capture device, where the CO2 sorbent material absorbs the heat when passing a heated zone of the carbon capture device.

The temperature of the flue gas may be in the range from 350 to 700° C, where the heat exchanger may be capable of absorbing heat energy and may provide a flue gas into the flue gas input that may be between 25-40° C. The carbon adsorption zone may have a temperature that is between 25-40° C, which is similar to the temperature of the flue gas. The CO2 adsorption material may be configured to adsorb CO2 at 25-40° C from the flue gas stream. In another embodiment, the temperature range may wary from 25-50° C or 25-70° C.

In one exemplary embodiment, the carbon capture device may comprise a heat exchanger configured to transfer thermal energy from the flue gas to a first cooling fluid. The cooling fluid may be utilized to transport the thermal energy from the heat exchanger to a heating zone, where the thermal energy from the cooling fluid is introduced into the carbon-rich CO2 adsorption material before the material enters the carbon desorption zone.

In one exemplary embodiment, the first and/or the second CO2 sorbent material may be heated from a first temperature to a second temperature in a first transition zone between the carbon adsorption zone and the carbon desorption zone. The temperature of the carbon-rich CO2 adsorption material may be increased from a first temperature (25-40° C) to a second temperature (120-150° C), where the increase in temperature will cause the adsorbed CO2 to be extracted from the CO2 adsorption material. Thus, the CO2 adsorption material may be heated from an adsorption temperature to a desorption temperature using the thermal energy extracted from the flue gas. Furthermore, the cooling fluid may be in connection with a cooling fan or a radiator, where excess thermal energy may be released, and where the thermal energy of the cooling fluid may be extracted in order to reuse the absorbed thermal energy from the flue gas and the heat exchanger.

In one exemplary embodiment, the first and/or the second CO2 sorbent material may be cooled from a second temperature to a first temperature in a second transition zone between the carbon desorption zone and the carbon adsorption zone. The cooling fluid may be fed from the cooling fan/radiator to cool the CO2 adsorption material during transport from the carbon adsorption zone to the carbon desorption zone in order to prepare the CO2 adsorption material for being at a temperature where the CO2 adsorption material is configured to adsorb the CO2 from the flue gas. Thus, the CO2 adsorption material may be cooled from the second temperature (120-150° C) to a first temperature 25-40° C) where the decrease in temperature will cause the CO2 adsorption material to be capable of adsorbing CO2 from the flue gas when the CO2 adsorption material enters the carbon adsorption zone.

In one exemplary embodiment, the actuation device may be in the form of a screw (auger) conveyor device. The screw conveyor device may be configured to mechanically transport the first (carbon-rich) CO2 adsorption material from the carbon adsorption zone, where the screw conveyor device may have a first conveyor input, and where the material is transported via rotational actuation of the screw conveyor from the carbon adsorption zone, and where the screw conveyor may have a first conveyor output, where the CO2 adsorption material is introduced into the carbon desorption zone. In the same manner, the screw conveyor, or a second screw conveyor having a second conveyor input, may transport the second (carbon-lean) CO2 adsorption material from the carbon desorption zone, and where the material is transported via rotational actuation of the screw conveyor from the carbon desorption zone, and where the screw conveyor may have a second conveyor output, where the carbon-lean CO2 adsorption material is introduced into the carbon adsorption zone and replaces the carbon-rich CO2 adsorption material that exits the carbon adsorption zone.

In one exemplary embodiment, the carbon capture device may comprise a closed loop system where the carbon adsorption zone may be in fluid communication with the carbon desorption zone, and/or where the carbon desorption zone may be in fluid communication with the carbon adsorption zone. The closed loop system may be a closed loop system when viewing the CO2 adsorption material, which means that the CO2 adsorption material is cycled from one zone to another zone and onwards to the next zone until it returns to the original zone, and the closed loop system ensures that the CO2 adsorption material is continuously cycled through the closed loop system.

In one exemplary embodiment, the carbon capture device may comprise a closed circulating structure configured to receive the carbon adsorption material, and where the closed circulating structure may comprise the carbon adsorption zone, the carbon desorption zone and/or the actuation device. The closed circulation structure may ensure that the CO2 adsorption material is circulated around the carbon capture device, where the CO2 adsorption material is moved around the device relative to the carbon adsorption zone, the carbon desorption zone and/or the actuation device. The circulating structure may also comprise a heating zone and a cooling zone, where the temperature of the CO2 adsorption material may be increased or decreased, respectively, before the CO2 adsorption material enters the carbon desorption zone or the carbon adsorption zone, respectively. Consequently, the adsorption material is designed to be able to withstand several thermal cycles while maintaining its structural integrity.

In one exemplary embodiment, the carbon adsorption zone may be arranged in a first tubular body, and the carbon desorption zone may be arranged in a second tubular body. The first tubular body and the second tubular body may have a CO2 adsorption material input and a CO2 adsorption material output, where the CO2 adsorption material is introduced via the input and removed from the tubular body via the output. In the area between the input and the output, the tubular body may comprise a holding zone, where the adsorption or the desorption may occur primarily in the holding zone of the CO2 adsorption material. The actuator device may be connected to the CO2 adsorption material output, where the actuator device mechanically moves the CO2 adsorption material from the CO2 adsorption material output of the first and/or the second tubular body and moves it towards the CO2 adsorption material input in the second and/or the first tubular body. Thus, it is possible to transport the CO2 adsorption material from one tubular body to another tubular body, where the tubular bodies may be arranged to allow the CO2 adsorption material to adsorb CO2 from the flue gas or to desorb CO2 from the CO2 adsorption material inside the second tubular body.

In one exemplary embodiment, the carbon adsorption zone and/or the carbon desorption zone may be in the form of a fluidized bed. The CO2 adsorbent material may be in the form of particles forming a fluidized bed, where the carbon adsorption zone and/or the carbon desorption zone may be provided with CO2 adsorption material particles in a fluidized bed. The actuator device may be configured to transport the particles in the form of a fluidized bed, or may also transport the particles as a solid particulate substance, where the carbon adsorption zone and the carbon desorption zone provide the particulate material in the form of a fluidized bed.

In one exemplary embodiment, the carbon capture device may be a Thermal Swing Adsorption (TSA) CO2 capture system. An advantageous contribution of the project might be a compact hybrid moving fluidized bed concept. It combines the advantages of a fluidized bed powder adsorbent system and a feed-screw-based powder transport system to build a compact loop where the adsorbent powder is processed through a temperature swing and recycled continuously in a compact form factor. To make the system efficient, the system could be designed with a minimal number of active components, such as pumps and heating/cooling systems, to reduce the overall cost. Inherent heat from the engine and flue gases will be reused to minimize the fuel consumption of the combustion engine.

In one exemplary embodiment, the carbon desorption zone may be in fluid communication with a CO2 output, where the CO2 output may optionally be in communication with a pump (or a compressor) and a CO2 storage tank. Thus, when the carbon is desorbed from the carbon-rich CO2 adsorption material in the carbon desorption zone, the CO2 may exit the carbon desorption zone via the CO2 output and may be pumped from the output into a storage tank, where the storage tank is capable of storing the CO2 that has been removed from the flue gas. The CO2 storage tank may be a pressurized tank with adsorbents to reduce storage pressure or without adsorbents. The tank may be fitted with a quick connect pressure connection to remove the stored CO2 or the tank is detachably connected to the system to swap the tank with an empty tank when necessary.

In one exemplary embodiment, the carbon capture device may be a carbon capture device for an internal combustion engine. The present system may be configured to receive flue gas from an internal combustion engine, where the flue gas of the internal combustion engine has an amount of CO2 which may be captured by the carbon capture device. The device is of a size where the device may be applied to a vehicle such as a transport truck or an automobile, or alternatively to any kind of vehicle that has an internal combustion engine. Alternatively, or additionally the carbon capture device may be applied to a marine vessel, having an internal combustion engine. The continuous cycle of the CO2 adsorption material in the system ensures that the CO2 adsorption material may continuously be reused by loading and unloading the CO2 adsorption material with CO2, and where heat from the flue gas may be utilized to heat up the CO2 adsorption material to transform the CO2 adsorption material from an adsorption state to a desorption state.

In one exemplary embodiment, the first CO2 sorbent material and/or the second CO2 sorbent material may be in the form of pellets, powder, a granular substance, a grainy substance, or particulates.

In one exemplary embodiment the carbon capture device may comprise an electronic controller, and sensors for measuring various parameters of the engine and the CO2 capture system to adjust the speed of sorbent transfer in the system, temperatures, or other variables relating to carbon capture.

The present disclosure also relates toa carbon capture system for flue gas, the system comprising: an internal combustion engine of a vehicle, and a carbon capture device in accordance with any of the preceding claims.

### Brief description of the drawings

The following is an explanation of exemplary embodiments with reference to the drawings, in which:
Fig. 1 shows a process diagram of a carbon capture system in accordance with the present disclosure,
Fig. 2 is a schematic view of an embodiment of a carbon capture system in accordance with the present disclosure, and
Fig. 3 is a schematic view of an embodiment of a carbon capture system in accordance with the present disclosure.

### Detailed description

Various exemplary embodiments and details are described hereinafter, with reference to the figures when relevant. It should be noted that the figures may or may not be drawn to scale, and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practised in any other embodiments even if not so illustrated, or if not so explicitly described.

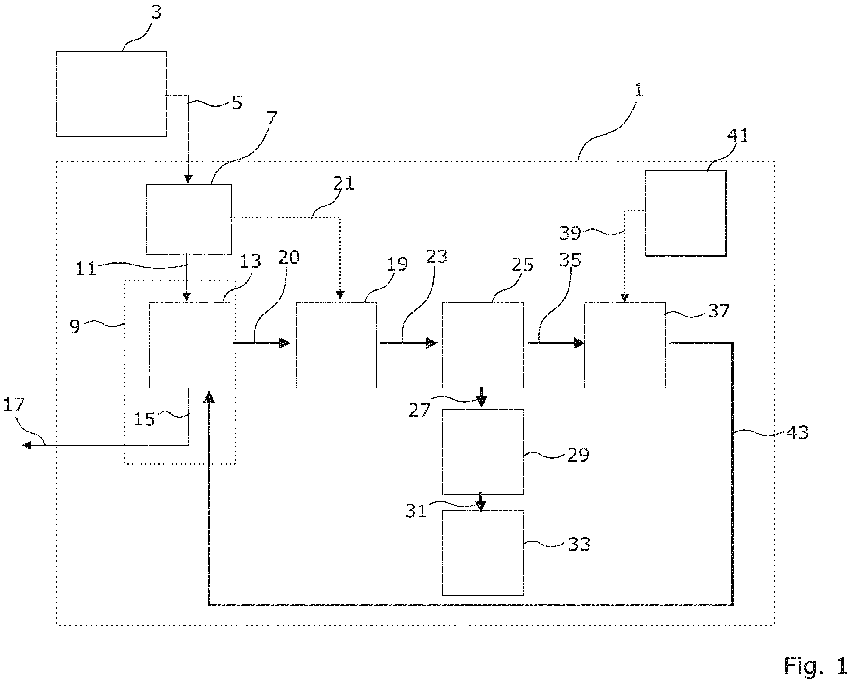

Fig. 1 shows a process diagram of an embodiment of a carbon capture system 1, where the carbon capture system 1 is in connection with an internal combustion engine 3. When the internal combustion engine 3 is operated and run, the engine 3 produces exhaust gasses, which may be in the form of flue gas, where the flue gas may be directed via a fluid communication part 5 to the carbon capture system 1. The fluid communication 5 may connect the internal combustion engine 3 with a heat exchanger 7 of the system 1, where the heat exchanger may be utilized to cool the flue gas (exhaust gasses) from a first temperature to a second temperature.

The heat exchanger 7 is in fluid communication with a first flue gas communication channel 9, where the first flue gas communication channel 9 comprises a first fluid input which receives the cooled flue gas 11 from the heat exchanger. The first flue gas communication channel 9 comprises a carbon adsorption zone 13, where the CO2 from the flue gas may be adsorbed by a CO2 sorbent material. The flue gas communication channel may further comprise a first outlet 15, where the flue gas may be released from the flue gas communication channel when CO2 has been adsorbed from the flue gas, and where the first outlet is connected to a flue gas output which releases the flue gas from the device 1. An example of the composition of flue gas of an internal combustion engine may be N2:67%, O2:9%, CO2: 12%, H2O 11%, CO+HC+NOx+SO2+PM:1%.

When the CO2 from the flue gas has been adsorbed by the CO2 sorbent material, the CO2 sorbent material is carbon-rich and is transported towards a carbon desorption zone 25, where the transport from the carbon adsorption zone 13 is performed using an actuator 19 in a direction 20 away from the carbon adsorption zone 13. While the CO2 sorbent material is being transported from the carbon adsorption zone 13, the CO2 sorbent material may be heated up from a first temperature to a second temperature, where a thermal energy 21 from the heat exchanger 7 may be utilized to warm up the CO2 sorbent material in order to transform the state of the CO2 sorbent material from being capable of receiving CO2 to a state where the CO2 sorbent material releases CO2. The actuator transports the carbon-rich material in a direction 23 towards a carbon desorption zone 25, and where the CO2 sorbent material has been heated up to a second temperature. In the carbon desorption zone 25 the carbon is released from the CO2 sorbent material, where the CO2 may be fed via fluid connection 27 to a pump 29 which pumps the CO2 via a fluid connection 31 to a storage tank 33, and where the storage tank can collect the CO2 that is captured from the flue gas.

At the desorption zone where the CO2 sorbent material has been depleted of CO2 (or has reached a certain level of CO2), the CO2 sorbent material is transported in a direction 35 via an actuation device 37, where the actuation device 37 transports the carbon-lean CO2 sorbent material in a direction 43 back to the carbon adsorption zone 13. During the transport by the actuator 37, the CO2 sorbent material may be cooled from a second temperature and back to a first temperature, using cooling 39 received from a cooling device 41, such as a radiator. Thus, the reduction in temperature ensures that the CO2 sorbent material is in a state where the CO2 sorbent material can receive CO2 from the flue gas.

Thus, a carbon capture device is provided where the CO2 sorbent material is cycled through different zones in the device to alternatively adsorb CO2 from a flue gas, or alternatively to desorb CO2 to a storage.

Storage tank 33 could be a detachable unit of the system that when filled with CO2 to a certain predetermined value, could be swapped over with an empty tank. Alternatively, the tank could be fitted with a pressure tight quick connect to empty the stored CO2 into another tank.

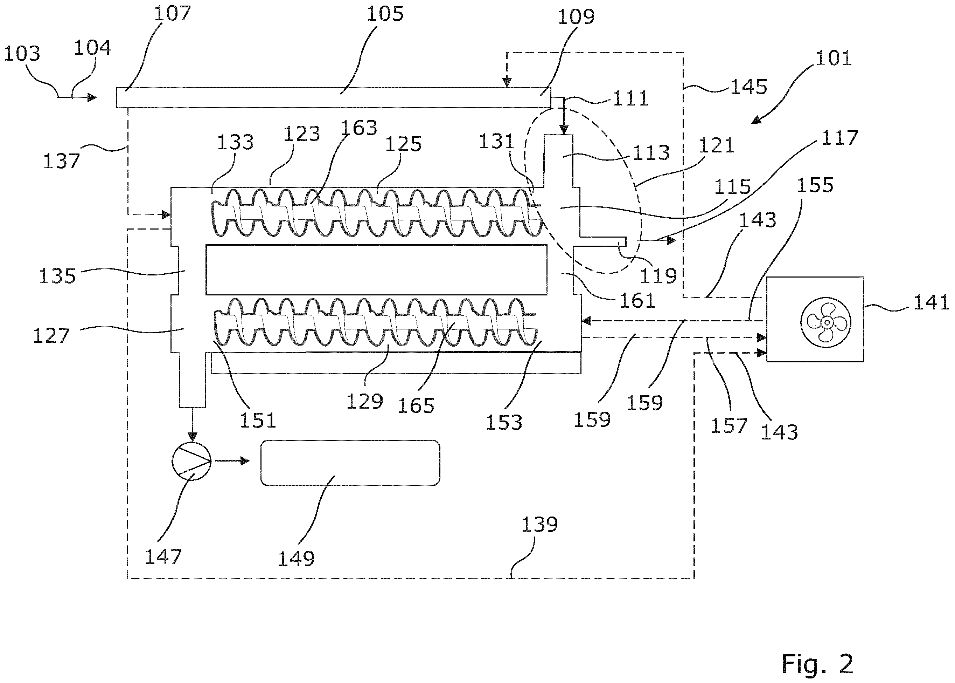

Fig. 2 shows a schematic diagram of a carbon capture device 101 in accordance with the present disclosure, where the carbon capture device comprises a flue gas input 103, where hot flue gas 104 is received from an internal combustion engine. The flue gas input 103 is fed into a heat exchanger 105 having an exchanger input 107 and an exchanger output 109, where the flue gas may enter the exchanger input 107 at a third temperature of between 350-700° C. During the transition from the exchanger input 107 and the exchanger output 109, the temperature of the flue gas will be reduced to a first temperature of about 25-40° C, where the flue gas has a temperature that is suited for the carbon capture device. Cold flue gas 111 is communicated to a first fluid input 113, where the flue gas enters a carbon adsorption zone 115, and where CO2 is removed from the flue gas, creating a carbon-lean flue gas. Carbon-lean flue gas 117 exits the carbon adsorption zone 115 via a first fluid outlet 119, where the first fluid outlet is in fluid communication with a flue gas outlet (not shown). The first fluid input 113, the carbon adsorption zone 115 and the first fluid output 119 may be part of a flue gas communication channel 121 which isolates the flue gas from the rest of the device, or at least the parts of the device that holds a CO2 adsorption material.

The carbon adsorption zone 115 comprises a CO2 adsorption material where the carbon adsorption material in the carbon adsorption zone is configured to adsorb CO2 from the flue gas 111, and remove CO2 from the flue gas 111 to create the carbon-lean flue gas 117 that may exit the carbon adsorption zone 115.

The carbon capture device 101 comprises a closed loop 123 holding a CO2 adsorption material, where the closed loop comprises the carbon adsorption zone 115, a first transition zone 125, a carbon desorption zone 127 and a second transition zone 129, where these zones comprise a CO2 adsorption material in different states, depending on the CO2 adsorption material capability of adsorbing or desorbing CO2, or during a transitional period where the CO2 adsorption material is transformed from an adsorption state to a desorption state, or vice versa. The CO2 adsorption material is in an adsorption state in the carbon adsorption zone 115, and is in a desorption state in the carbon desorption zone 127. However, in the first transition zone 125 the CO2 adsorption material is heated up from a first temperature of 25-40° C in a first end 131 of the first transition zone 125 to a second temperature of between 120-150° C in a second end 133 of the transition zone, where the second temperature is suited for carbon desorption in the carbon desorption zone 127. The thermal energy utilized to heat up the CO2 adsorption material from its first temperature to the second temperature may be harvested from the heat exchanger 105, via e.g. a first cooling/heating fluid 137. When the thermal energy has been absorbed by the CO2 adsorption material in the first transition zone 125, a second cooling/heating fluid 139 is fed from the first transition zone 125 to a cooling device 141 (radiator, cooling fan), where the cooling device 141 absorbs thermal energy from the cooling fluid and returns a third cooling/heating fluid 145 back to the heat exchanger 105, and where the cooling/heating fluid is configured to absorb heat from the flue gas, thereby creating a first temperature loop 143.

The CO2 adsorption material may be transferred from the second end 133 to the carbon desorption zone 127 via a first CO2 adsorption material transfer channel 135, where the CO2 adsorption material is at a second temperature of between 120-150° C. In the carbon desorption zone 127, the carbon-rich CO2 adsorption material may release the adsorbed CO2 from the flue gas, where the released (desorbed) CO2 may be communicated from the carbon desorption zone 127 to a first pump 147, where the pump 147 may communicate CO2 to a storage tank 149. The storage tank may hold compressed CO2, or may be an adsorbent quick-connect, low-pressure storage tank. To make the system more efficient, the present disclosure aims at minimizing the storage pressure of the CO2 tanks by using sorbent materials like MOFs that are specially tailored for this purpose. Reducing the storage pressure would considerably reduce the pumping requirements for the storage tank and increase safety associated with these tanks while retaining storage capacity.

When the carbon-rich CO2 adsorption material has been desorbed sufficiently in the carbon desorption zone 127, the CO2 adsorption material may be transported back to the carbon adsorption zone 115 via the second transition zone 129, where the CO2 adsorption material enters via a first end 151 of the second transition zone 129 and exits the second transition zone via a second end 153 of the second transition zone 129. However, in the second transition zone 129 the CO2 adsorption material is cooled from a second temperature of 120-150° C in the first end 151 of the second transition zone to a first temperature of between 25-40° C in a second end 153 of the second transition zone 129, where the first temperature is suited for carbon adsorption in the carbon adsorption zone 115. The thermal energy utilized to cool down the CO2 adsorption material from its second temperature to the first temperature may be harvested from the cooling device 141, via e.g. a fourth cooling/heating fluid 155. When the thermal energy has been absorbed by the cooling fluid in the second transition zone 129, a fifth cooling/heating fluid 157 is fed from the second transition zone 129 to the cooling device 141 (radiator, cooling fan), where the cooling device 141 absorbs thermal energy from the cooling fluid, thereby creating a second temperature loop 159.

The CO2 adsorption material may be transferred from the second end 153 of the second transition zone 129 to the carbon adsorption zone 115 via a second CO2 adsorption material transfer channel 161, where the CO2 adsorption material is at a first temperature of between 25-40° C.

The first transition zone 125 and the second transition zone 129 may be provided with a first actuator device 163 and a second actuator device 165, where the actuator devices 163, 165 may be configured to transport the CO2 adsorption material from the first ends 131, 151 of the transition zones 125, 129 and towards the second ends 133, 153 of the transition zones 125, 129, where the actuators may mechanically move the CO2 adsorption material from the carbon adsorption zone 115 to the carbon desorption zone 127, and from the carbon desorption zone 127 to the carbon adsorption zone 115, and maintain a cyclical flow of CO2 adsorption material in the closed loop 123 of CO2 adsorption material.

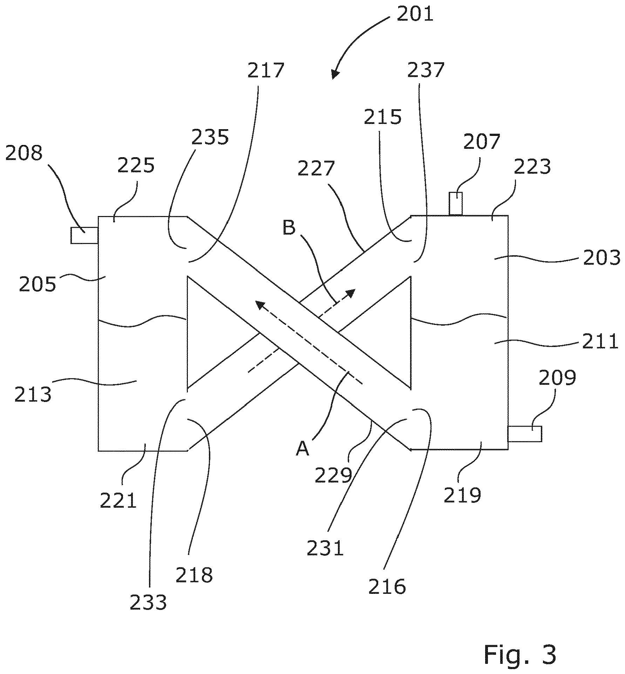

Fig. 3 shows a simple schematical diagram of a possible embodiment of a carbon capture system 201 in accordance with the present disclosure, where the carbon capture system 201 may include some or all elements of the devices shown in Fig. 1 and/or Fig. 2. The simplistic view of the carbon capture system 201 may comprise a carbon adsorption zone 203 and a carbon desorption zone 205 which are in the form of tubular members that may be positioned in a vertical position. The carbon adsorption zone may be in communication with a first fluid input 207, where flue gas may be fed into the carbon adsorption zone 203, and a first fluid output 209, where the flue gas may exit the carbon adsorption zone 203. The carbon desorption zone may comprise a CO2 outlet 208 which is configured to release desorbed CO2 from the carbon desorption zone 205. The carbon adsorption zone 203 may comprise a first CO2 sorbent material 211, while the carbon desorption zone 205 may comprise a second CO2 sorbent material 213. The carbon adsorption zone 203 may have a first CO2 sorbent material input 215 and a first CO2 sorbent material output 216, while the carbon desorption zone 205 may have a second CO2 sorbent material input 217 and a second CO2 sorbent material output 218, where the inputs are positioned close to bottom ends 219, 221 of the carbon adsorption zone 203 and the carbon desorption zone 205, while the outputs are positioned close to top ends 223, 225 of the carbon adsorption zone 203 and the carbon desorption zone 205.

The carbon capture device 201 may further comprise a first transition zone 227 and a second transition zone 229, where the transition zones 227, 229 comprise an actuator device to transport CO2 sorbent material from first ends 231, 233 of the first transition zone 227 and the second transition zone 229 to second ends 235, 237 of the first transition zone 227 and the second transition zone 229, in the direction of arrows A, B. The temperature of the CO2 sorbent material may be increased and/or decreased in the transition zones 227, 229, as disclosed in relation to Fig. 1 and Fig. 2. The first ends 231, 233 may be connected to the first CO2 sorbent material input 215 and the second CO2 sorbent material output 218, and the second ends 235, 237 may be connected to the first CO2 sorbent material input 215 and the second CO2 sorbent material input 217, where the actuator device of the transition zones 227, 229 are configured to elevate the CO2 sorbent material in a vertical direction, so that when the CO2 sorbent material enters the inputs 215, 217, gravity makes the CO2 sorbent material mix in with the first CO2 sorbent material 211 and the second CO2 sorbent material 213. Thus, the system is capable of creating a cyclical route for the CO2 sorbent material to be transferred continuously between the carbon adsorption zone 203 and the carbon desorption zone 205.

The use of the terms "first", "second", "third" and "fourth", "primary", "secondary", "tertiary", etc., does not imply any particular order, but are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than a restrictive sense. The claimed invention is intended to cover all alternatives, modifications, and equivalents.

### List of references

- 1: Carbon capture system/device
- 3: Internal combustion engine
- 5: Fluid communication
- 7: Heat exchanger
- 9: Flue gas communication channel
- 11: Cooled flue gas
- 13: Carbon adsorption zone
- 15: First outlet
- 17: Carbon desorption zone
- 19: Actuator
- 20: Direction
- 21: Thermal energy
- 23: Direction
- 25: Carbon desorption zone
- 27: CO2 Feed
- 29: Pump
- 31: Fluid connection
- 33: Storage tank
- 35: Direction
- 37: Actuation device
- 39: Cooling
- 41: Cooling device
- 43: Direction
- 101: Carbon capture system
- 103: Flue gas input
- 104: Hot flue gas
- 105: Heat exchanger
- 107: Exchanger input
- 109: Exchanger output
- 111: Cold flue gas
- 113: First fluid input
- 115: Carbon adsorption zone
- 117: Carbon lean flue gas
- 119: First fluid outlet
- 121: Flue gas communication channel
- 123: Closed CO2 sorbent material loop
- 125: First transition zone
- 127: Carbon desorption zone
- 129: Second transition zone
- 131: First end of first transition zone
- 133: Second end of first transition zone
- 135: First CO2 adsorption material transfer channel
- 137: First cooling/heating fluid
- 139: Second cooling/heating fluid
- 141: Cooling device
- 143: First temperature loop
- 145: Third cooling/heating fluid
- 147: First pump
- 149: Storage tank
- 151: First end of the second transition zone
- 153: Second end of the second transition zone
- 155: Fourth cooling/heating fluid
- 157: Fifth cooling/heating fluid
- 159: Second temperature loop
- 161: Second CO2 adsorption material transfer channel
- 163: First actuator device
- 165: Second actuator device
- 201: Carbon capture system
- 203: Carbon adsorption zone
- 205: Carbon desorption zone
- 207: First fluid input
- 208: First carbon outlet
- 209: First fluid output
- 211: First CO2 sorbent material
- 213: Second CO2 sorbent material
- 215: First CO2 sorbent material input
- 216: First CO2 sorbent material output
- 217: Second CO2 sorbent material input
- 218: Second CO2 sorbent material output
- 219: Bottom end of carbon adsorption zone
- 221: Bottom end of carbon desorption zone
- 223: Top end of carbon adsorption zone
- 225: Top end of carbon desorption zone
- 227: First transition zone
- 229: Second transition zone
- 231: First end of the first transition zone
- 233: First end of the second transition zone
- 235: First end of the second transition zone
- 237: Second end of the second transition zone
- A: Arrow
- B: Arrow

### Claims

1. A downhole self-propelling wireline tool (1) for propelling a tool forward in a well (2) and/or for providing weight on a bit while performing an operation, comprising:
   - a tool body (3),
   - an electric motor (4) operating at a rotational speed and powered by a wireline (5),
   - a plurality of projectable arm assemblies (6) movably connected at a first arm end (7) with the tool body and projectable from the tool body by means of a first fluid having a first fluid pressure,

## Claims

1. A carbon capture device, comprising
- a flue gas input,
- a flue gas output,
- a carbon adsorption zone that is in fluid communication with the flue gas input and in fluid communication with the flue gas output, where a first flue gas communication channel comprises the carbon adsorption zone, where the first flue gas communication channel comprises a first fluid input and a first fluid output, and the carbon adsorption zone comprises a first CO2 sorbent material positioned downstream from the first fluid input and upstream to the first fluid output, where the first fluid input is in fluid communication with the flue gas input, and where the flue gas is directed past the CO2 sorbent material and towards the first fluid output, where the first fluid output is in fluid communication with the flue gas output,
- a carbon desorption zone, where the carbon desorption zone comprises a second CO2 sorbent material, and
- an actuation device where the actuation device is configured to transport carbon- rich first C02 sorbent material from the carbon adsorption zone to the carbon desorption zone and to transport carbon-lean second CO2 sorbent material from the carbon desorption zone to the carbon adsorption zone.

2. A carbon capture device in accordance with claim 1, wherein the device comprises a heat exchanger that is configured to extract heat energy from the flue gas upstream from the flue gas input, and optionally provide thermal energy to the CO2 sorbent material to increase or decrease the temperature of the CO2 sorbent material inside the system.

3. A carbon capture device in accordance with any of the preceding claims, wherein the actuation device may be in the form of a screw (auger) conveyor device or a belt conveyor having transport pockets.

4. A carbon capture device in accordance with any of the preceding claims, wherein the carbon capture device comprises a closed loop system where the carbon adsorption zone is in communication with the carbon desorption zone, and/or where the carbon desorption zone is in communication with the carbon adsorption zone.

5. A carbon capture device in accordance with any of the preceding claims, wherein the carbon capture device comprises a closed circulating structure configured to receive the carbon adsorption material, and where the closed circulating structure comprises the carbon adsorption zone, the carbon desorption zone and/or the actuation device.

6. A carbon capture device in accordance with any of the preceding claims, wherein the carbon capture device comprises a heat exchanger configured to transfer thermal energy from the flue gas to a first cooling fluid.

7. A carbon capture device in accordance with any of the preceding claims, wherein the first and/or the second CO2 sorbent material is heated from a first temperature to a second temperature in a first transition zone between the carbon adsorption zone and the carbon desorption zone.

8. A carbon capture device in accordance with any of the preceding claims, wherein the first and/or the second CO2 sorbent material is cooled from a second temperature to a first temperature in a second transition zone between the carbon desorption zone and the carbon adsorption zone.

9. A carbon capture device in accordance with any of the preceding claims, wherein the carbon adsorption zone is arranged in a first tubular body, and the carbon desorption zone is arranged in a second tubular body.

10. A carbon capture device in accordance with any of the preceding claims, wherein the carbon adsorption zone and/or the carbon desorption zone is in the form of a constantly moving fluidized bed.

11. A carbon capture device in accordance with any of the preceding claims, wherein the carbon capture device is a Thermal Swing Adsorption CO2 capture system.

12. A carbon capture device in accordance with any of the preceding claims, wherein the carbon desorption zone is in fluid communication with a CO2 output, where the CO2 output may optionally be in communication with a pump and a CO2 storage tank.

13. A carbon capture device in accordance with any of the preceding claims, wherein the carbon capture device is a carbon capture device for an internal combustion engine.

14. A carbon capture device in accordance with any of the preceding claims, wherein the first CO2 sorbent material and/or the second CO2 sorbent material is in the form of pellets, powder, a granular substance, a grainy substance, extruded forms, fibres or particulates.

15. A carbon capture system for flue gas, the system comprising:
- an internal combustion engine of a vehicle, and
- a carbon capture device in accordance with any of the preceding claims.
